# EUROPEAN PATENT SPECIFICATION

(11) **EP 0 275 124 B1**
(45) Date of publication and mention of the grant of the patent: **24.04.1996**
(21) Application number: 88100562.3
(22) Date of filing: 16.01.1988
(51) Int. Cl.: G06T 11/00, G06F 17/30

(54) **Database system for image composition**
Datenbanksystem für Bildkomposition
Système de base de données pour la composition d'image

(30) Priority: 16.01.1987 JP 8546/87; 16.01.1987 JP 8547/87
(43) Date of publication of application: 20.07.1988
(73) Proprietor: SHARP KABUSHIKI KAISHA, Osaka 545 (JP)
(72) Inventor: Iwasaki, Keisuke, Tenri-Shi Nara-ken (JP); Takakura, Masaki, Higashiosaka-shi Osaka-fu (JP); Yamane, Yasukuni, Shiki-gun Nara-ken (JP); Kako, Noritosi, Nara-shi Nara-ken (JP)
(74) Representative: Selting, Günther, Dipl.-Ing.

(56) References cited:
- EP-A- 0 206 565
- GB-A- 2 157 036

## Description

The present invention relates to an image data managing unit

An image retrieval and registration system capable of managing image data is known from GB-A-2 157 036. The known system comprises an image data memory means for memorizing image data and for memorizing attribute information of said image data. The known system further comprises an image output means which respectively reads out from said image data memory means the image data corresponding to the respective attribute information.

The system of GB-A-2 157 036 stores image data for complete images in combination with attribute information. If an image is to be output, identification data which are comprised in the attribute information and displayed as locations in a map are used.

Management of information by the aid of the data base system is extremely convenient particularly when records in the file are to be searched for, since an operator can set various conditions for character-strings or numerical values serving as keys for retrieval so as to freely derive the record watching such conditions, besides directly taking out the specific record through employment of identification numbers or ID numbers (referred to as ID numbers hereinafter) and other identification symbols.

In the known data managing units it has been practice to manage the image data for each image individually within a data file as independent records.

However, in the case where the large number of image data to be managed in the data file by the image data managing unit as described above are a group of images resembling each other, and any image which are managed by the unit are each those formed only by combination of some kinds of elements, or those including different factors respectively, but having some elements partly common to each other, there are invited problems as follows.
(1) Since many images have partly the same elements, identical bit patterns, etc. are present in duplication, in different regions of the memory unit which memorized respective image data, thus wastefully requiring a large memory capacity.
(2) Due to the fact that respective image data for one image are each stored as independent records within the data file, in the case where alteration is effected with respect to the common element, it is necessary to independently carry out the same image data alteration processing with respect to the element for each image, thus making the work troublesome.
(3) When it is intended to alter only part of the element with respect to one image, even if the same image data as the element after the alteration is already present at part of the image data for other record, alteration processing of the image data must be newly effected in the similar manner as in the change into a fresh element, with an increase of burden on the work. Meanwhile, in the case where only the position of part of the element is to be altered with respect to one image, the image data must be newly altered in the similar manner as in the change to a fresh element.
(4) In the case where a plurality of images different only in part of the elements are prepared so as to effect comparative review of the images by sequential change-over thereof, it is required to fully output the entire image data for one image into a display unit including the image data of the common element, and thus, much time is necessary for the processing, with a consequent increase of waiting time for the operator.

This practice has the disadvantage that it requires a large memory capacity and that the assess time is unconveniently long. Further, it has the disadvantage that changes in the image data have to be performed for each image individually.

Therefore, it is the object of the present invention to provide an image data managing unit having only a small memory means, the image data managing unit being simplified in operation and fast and accurate in functioning.

The object is solved according to the invention with the features of claim 1.

According to the present invention there is provided an image data managing unit which includes an image data memory means for memorizing part image data representing any desired portion of one image and also attribute information of said part image data respectively, a combination memory means for memorizing combination information which represents the combination of respective part image data necessary for forming one image by enumerating each of the attribute information, a position memory means for memorizing positional information which designates respective positions on the image, of the respective part image data necessary for forming one image, and an image output means which respectively reads out, from said image data memory means, the part image data corresponding to the respective attribute information enumerated in the combination information memorized by said combination memory means, and which outputs the respective part image data as read out so as to be disposed at the predetermined positions on the image according to the positional information memorized by said position memory means.

Thus, in the image data managing unit according to the present invention as referred to above, the part image data is composed, for example, of the bit pattern, and has any desired size within one image. Each part image data representing an arbitrary portion of one image may be adapted to form one image by combining or tiling respective data and also by overlapping part or entire portion thereof. The attribute information is constituted by ID numbers (i.e. identification numbers) for identifying the part image data. The image data memory means includes, for example, a memory unit such as a hard disc or the like, and a managing means for managing input and output of said memory unit. This managing means causes the part image data and the attribute information in pair to be stored in the memory unit as one record in the data file for management mainly by the ID number as the key.

The combination information is intended to designate one or more than two part image data necessary for the formation of one image. This combination information may be one which enumerates only part of the attribute information, besides that enumerating all of the contents of the attribute information of the required part image data but should contain at least one identification symbol corresponding to the part image data at 1:1 for example, as in the ID number.

The positional information has for its object to indicate the position of the respective part image data on the image as designated by the combination information, and there is, for example, such a practice that, with one image represented by a bit map, the reference position of the part image data is indicated by the coordinates on this bit map.

The combination memory means and the position memory means have the construction similar to that of the image data memory means, and the same hardware may be utilized therefor. Moreover, the software for the managing means may be arranged to be one which may be commonly used. This managing means in the combination memory means causes the respective combination information to be stored in the memory unit as each one record in the data file different from the image data memory means, with said one record corresponding to one image. In the case where, for example, positions of the respective part image data having the same part name of the element are common to each other in all of the images, the positional information may be stored in the memory means as the data file different from the image data memory means and the combination memory means so as to be referred to for the formation of the respective images. Meanwhile, even in the same part image data, in the case where the positions thereof on the respective images are different from each other, it may be so arranged to include the respective positional information in the record of each combination information.

It is to be noted here that, when the positional information each corresponding to the respective attribute information of the part image data is contained in the record of the combination information, such information as the part name, etc. of the respective part image data is not necessarily required, but in the case where the positional information become different data files, it is necessary to affix part information or the like per each part image data so as to correspond the respective attribute information of the combination information, to the respective coordinates of the positional information. Such part information may be included in the attribute information of the part image data, and may also be constituted by forming data files enumerating attribute information of one or more than two part image data equivalent to respective part names. If such part information is available, it is convenient in the case where the combination information, etc. is to be formed.

The image output means first reads out from the combination memory means, the combination information corresponding to the image required by the operator, and then, reads out from the image data memory means one or more than two part image data corresponding to, for example, ID numbers enumerated in the combination information as read out. Subsequently, said means arranges the respective part image data at predetermined positions, for example, on the bit map according to the respective positional information newly read out from the position memory means or respective positional information already read out together with the combination information. The image data thus formed is outputted to the image display unit for display on the display screen, and is subjected to corrections such as alterations through operation by an operator depending on necessity or outputted to a printing unit for preparation of hard copy, etc.

These and other objects and features of the present invention will become apparent from the following description taken in conjunction with the preferred embodiment thereof with reference to the accompanying drawings, in which;

In Figs. 1 to 5 related to a first embodiment of an image data managing unit which is shown for comparison
Fig. 1 is a schematic block diagram showing a general construction of hardware for a data base system according to the above-mentioned embodiment,
Fig. 2 is a diagram showing a display screen on which a chart is displayed,
Fig. 3 is a diagram showing the display screen on which the chart and symbols are displayed, and
Figs. 4 and 5 are flow-charts respectively for explaining functions of the data base system of Fig. 1.
In Figs. 6(A) to 9 (B) related to an embodiment of the present invention;

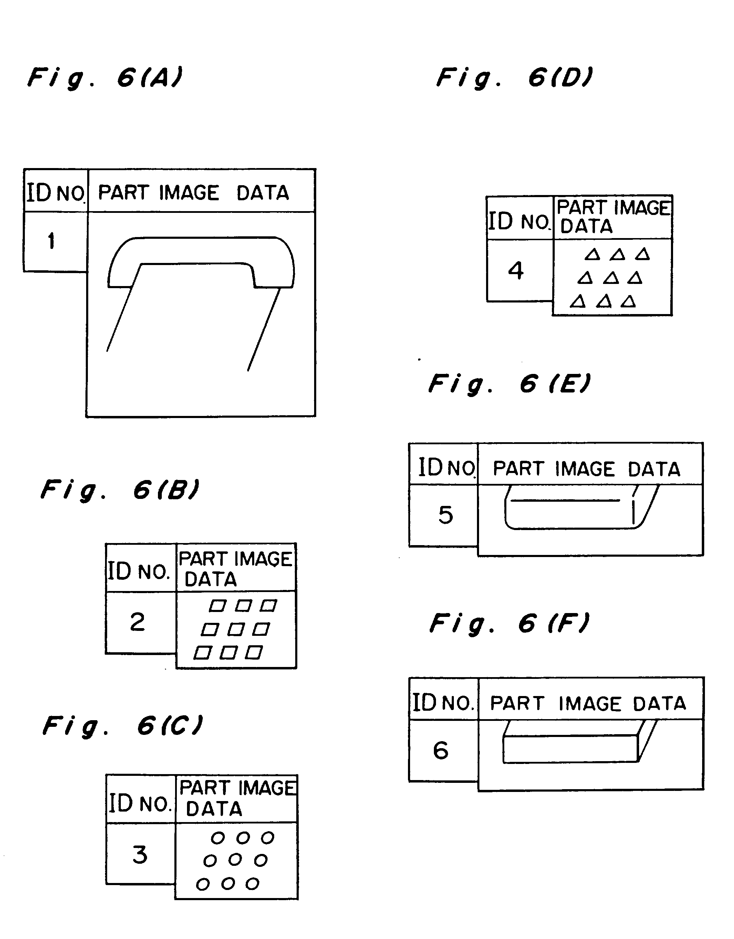

Figs. 6(A) to 6(F) are respectively diagrams for explaining part image data and record structure of ID numbers,

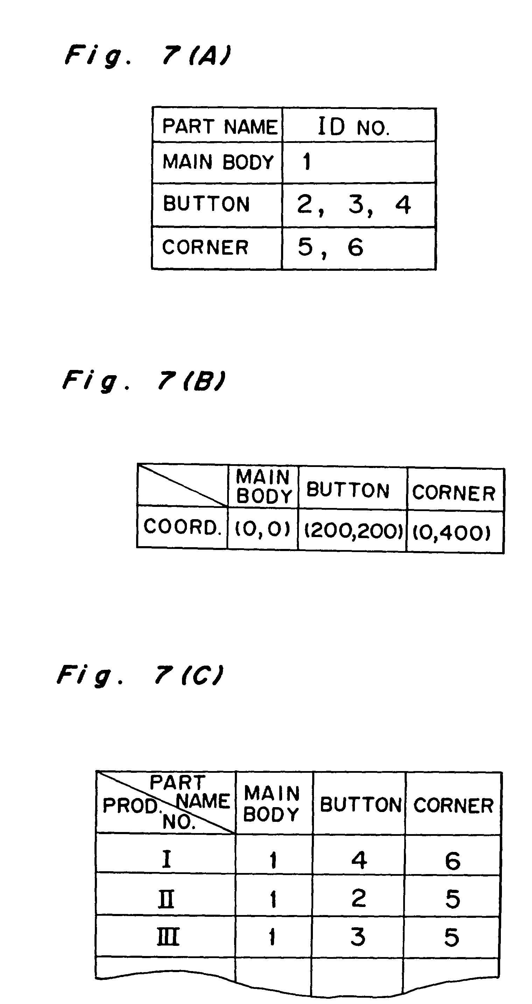

Fig 7(A) is a diagram for explaining structure of the data file for part information,
Fig. 7(B) is a diagram for explaining structure of the data file for positional information,
Fig. 7(C) is a diagram for explaining structure of the data file for combination information,

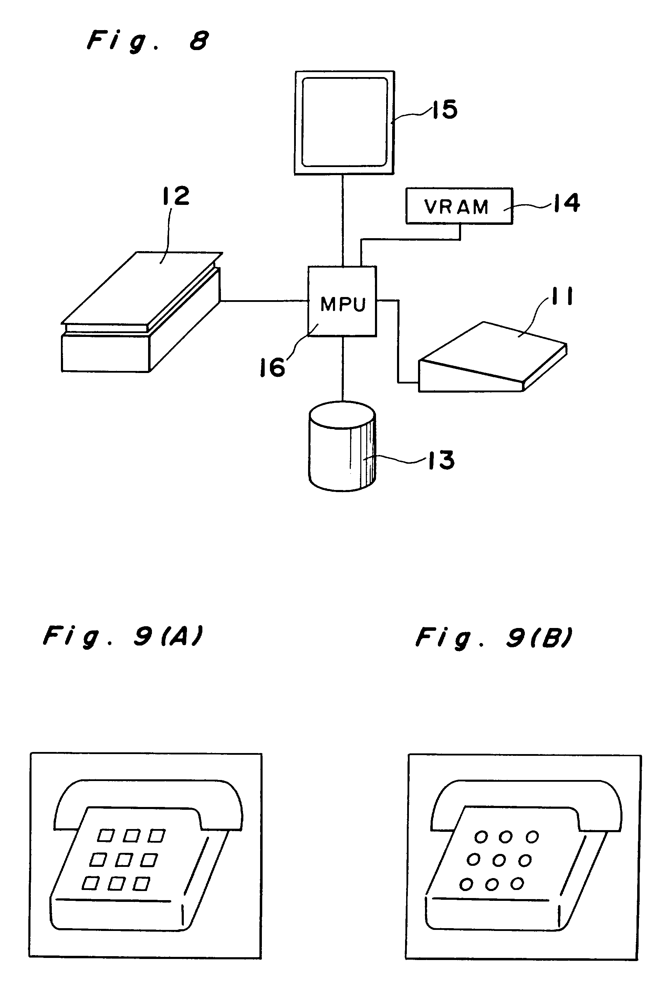

Fig. 8 is schematic block diagram showing a construction of an image data base system for the present invention,
Fig. 9(A) is a diagram showing an image of a product No. "II" given on the image display unit, and
Fig. 9(B) is a diagram similar to Fig. 9(A), which particularly shows an image of a product No. "III".

Before the description of the present invention proceeds, it is to be noted that like parts are designated by like reference numerals throughout the accompanying drawings.

Referring now to the drawings, the present invention trill be described in detail according to embodiment thereof as illustrated in the accompanying figures.

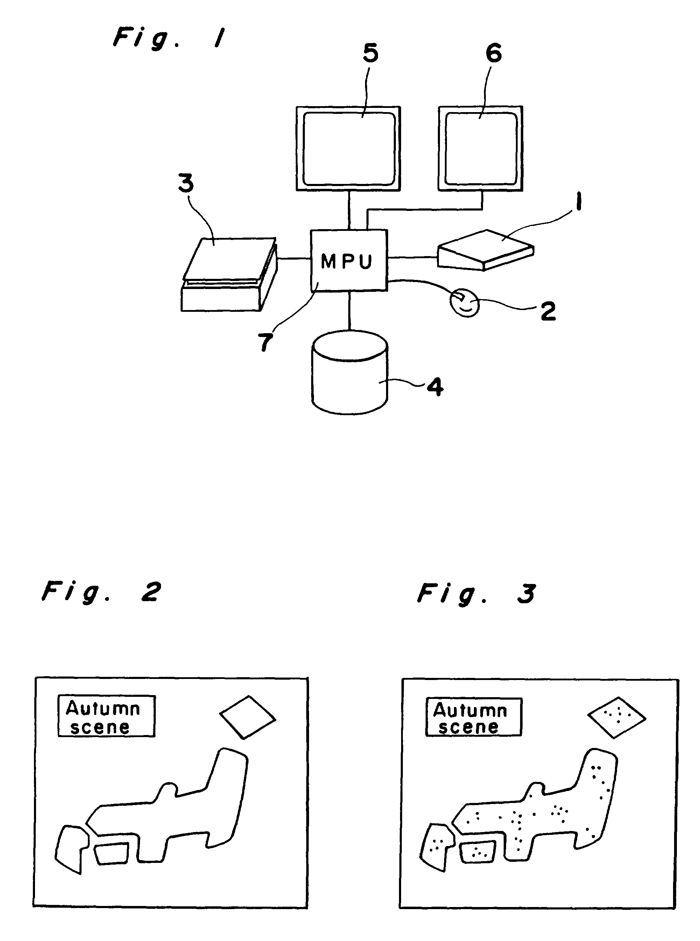

Figs. 1 to 5 relate to an image data managing unit which is shown for comparison and in which the information to be managed is assumed to be of two-dimensional image data.

In Fig. 1, there is shown the hardware which generally includes a keyboard 1, a mouse 2, an image input device 3, an external memory device 4, a first image display device 5 and a second image display device 6, all of which are respectively coupled to a processor unit 7 as shown. The keyboard 1 is an input device for an operator to apply instructions, information, etc. to the processor unit 7. The mouse 2, which is also an input device for the operator to send instructions to the processor unit 7, is used in this embodiment, to effect displacement of a pointing mark displayed on the display screen of the second image display device 6. The image input device 3 is an input device which reads images drawn on a paper sheet or the like so as to form image data. Meanwhile, the external memory device 4 is a memory device such as a hard disc, etc. for memorizing processing programs for the unit, respective files processed by said programs, and patterns of charts, etc. The first image display device 5 is a bit map display for displaying a two-dimensional image data on a CRT screen. The second image display device 6 is a bit map display for displaying charts and symbols on the CRT screen.

The external memory device 4 memorizes the bit pattern of the chart formed through employment of the image input device 3, etc., and sends out the bit pattern of this chart to the second image display device 6 as a chart forming means. As shown in Fig. 2, the chart is composed of a rough white map of Japan, and characters of "Autumn scene" for explaining content of the image data file. Moreover, the external memory device 4 memorizes respective files to be processed together with the processing programs for the unit. These files first store as image data files, the image data representing photographs for scenery in autumn in Japan, in the respective records with ID numbers affixed. Meanwhile, as recording means, there is provided a file for a managing table which shows coordinates on the chart by "X coordinate" and "Y coordinate" as shown in Table 1 given below.

**Table 1**

| ID No. | X Coordinate | Y Coordinate |
|---|---|---|
| 1 | 127 | 73 |
| 2 | 368 | 211 |
| 3 | 249 | 157 |
| 4 | 315 | 96 |

The figures in the above items for the "X coordinate" and "Y coordinate" respectively show positions in the directions of X axis and Y axis on the chart shown in Fig. 2, thus both indicating the coordinates on said chart. The positions indicated by these coordinates are those which show, in the map of Japan on the chart, places where the image data in the respective records are photographed. The respective coordinates are affixed with the ID numbers of the equivalent image data on the image data files, so as to correspond to any of the autumn scene photographs as attribute information. The first image display device 5 displays the autumn scene photograph by the image data of the designated record. The second image display device 6 displays as a display means, the chart forwarded from the external memory device 4 on the screen, and also reads out the respective coordinates of the managing table so as to display a point as the symbol at the position indicated by these coordinates. Then on the display screen of this second image display device 6, many points are shown to overlap the map of Japan on the chart as shown in Fig. 3, thereby to indicate that the autumn scene photographs of the areas displayed by these points are prepared in the image data files. on the display screen of this second image display device 6, a pointing mark is simultaneously displayed, and through operation of the mouse 2 by the operator this pointing mark may be displaced on the display screen. Thus, as an indicating means, when the operator depresses, for example, a CR key of the keyboard 1, in a state where the pointing mark is overlapped with any of the points, said overlapping point is specified, and retrieval of the coordinates indicating said point is effected from the managing table, while, designation of the record of the image data file is automatically effected based on the ID number affixed to the coordinates as retrieved. Upon designation of the record of the image data file, the autumn scene photograph is displayed, for example, on the first image display device 5 together with the ID number of said record.

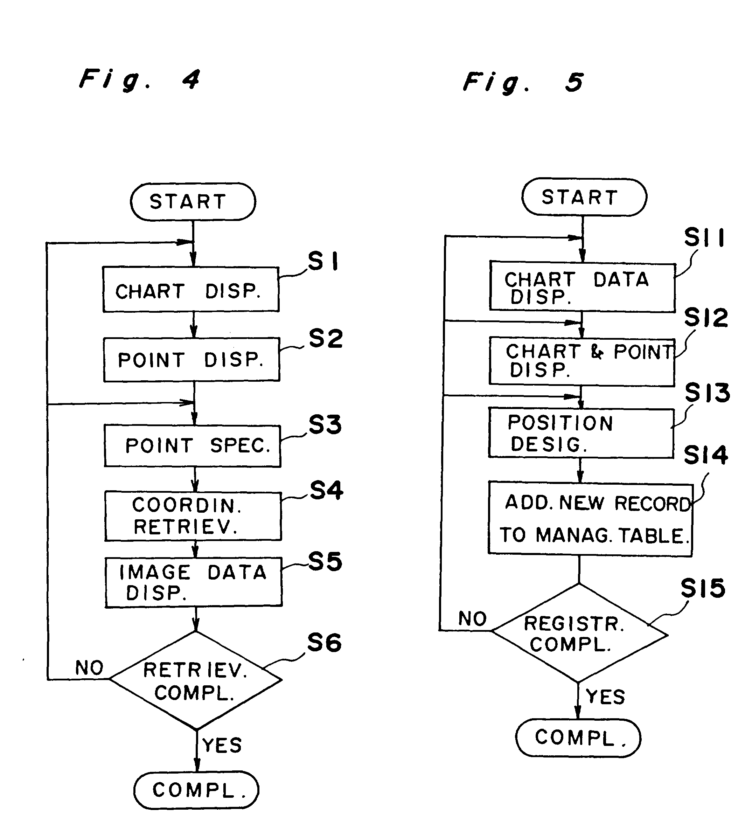

Subsequently, functioning of the unit of Fig. 1 as described so far will be explained with reference to flow-charts of Figs. 4 and 5.

In the first place, at Step S1, the chart memorized in the external memory device 4 is displayed on the display screen of the second image display device 6. Next, at Step S2, the respective coordinates of the managing table stored in the external memory device 4 are read out, and a point is displayed at the position indicated by the coordinates so as to overlap the previous chart. Thus, when the operator specifies the point through operation of the mouse 2 (Step S3), retrieval of the coordinates indicating said point is effected (Step S4), and the record in the image data file corresponding to the coordinates is designated, while, the image data within said record is displayed on the first image display device 5 (Step S5). For specifying another point again, the procedure returns to Step S3, and in a case where retrieval is to be effected by different attribute through employment of still another chart, the procedure returns to Step S1, and processing is terminated upon completion of the retrieval (Step S6).

Hereinbelow, functioning in the case where new image data are registered in the above unit will be explained with reference to the flow-chart of Fig. 5.

Firstly, a fresh autumn scene photograph is taken into the unit by the image input device 3, etc., as the image data, and after preparation of a fresh record affixed with ID number in the image data file, said image is displayed on the first image display device 5 (Step S11). Subsequently, the chart as memorized in the external memory device 4 and the respective points indicated by the coordinates of the managing table are displayed on the display screen of the second image display device 6. (Step S12). Then, the operator indicates the position on the chart through operation of the mouse 2 (Step S13). The position indicated by the operator is so set that, if the image to be newly registered is of the autumn scene photograph in Sendai, Japan, the position of Sendai is pointed in the map of Japan on the chart. Thereafter, the coordinates for the position thus indicated are automatically read, and the record of said coordinates is added to the managing table, with the corresponding ID number affixed (Step S14). For registering the same image at the other position also, the procedure returns to Step S13, and for registration in another chart showing a different attribute, the procedure returns to Step S12, while in the case where other image is to be registered, the procedure returns to Step S11, with the processing terminated upon completion of the registration (Step S15). it is to be noted here that, in the present embodiment, since the same image data never has more than two coordinates on the identical chart, the loop returning to Step S13 is not used.

As is seen from the foregoing description, the unit of Fig. 1 is provided with the chart forming means for forming a pattern of a chart to be displayed on the display screen, the recording means for recording, per each record, attribute information which designates with predetermined position on said chart, the display means for displaying the chart formed by said chart forming means on the screen and also for displaying the symbol at the predetermined position of chart as designated by each attribute information, and the designating means capable of designating the record corresponding to the attribute information which indicates the position of the symbol by specifying any of the symbol on the chart displayed on the screen by the display means.

By the above arrangement , it is possible to readily retrieve the record in object in a visual method, even if the operator is not accurately aware of the attribute of the record. Moreover, complicated file structure may be easily understood, since the relation between the respective records can be visually recognized. Accordingly, by the use of the above unit, it becomes possible to effect flexible and proper information management according to the contents of data.

Figs. 6 to 9 relate to an embodiment of the present invention.

In Fig. 8, there is shown an image data managing unit according to the present invention, which includes a keyboard 11, an image input device 12, an external memory device 13, a VRAM 14, and an image display device 15, which are each connected to a processor unit 16 as illustrated. The keyboard 11 as the input device is intended to send instruction, information, etc. to the processor unit 16 by the operator. The image input device 12 functions as the input device which reads images drawn on a paper sheet, etc., so as to form image data. The external memory device 13 serves as the memory device such as a hard disc or the like which stores the part image data and attribute information thereof, combination information, positional information, and processing program of the image data base, etc. The VRAM 14 is an RAM which temporarily memorizes, on the bit map, the image data to be displayed on the image display device 15, which is a bit map display for displaying the image data stored in the VRAM 14. The processor unit 16 constituted by a microcomputer and its peripheral devices is arranged to read and execute the processing program of the image data base stored in the external memory device 13, thereby to write in the VRAM 4, the image data inputted from the image input device 12 or part image data etc. read out from the external memory device 13 based on the instruction from the keyboard 11 for display on the image display device 15, and also for effecting various processings.

Subsequently, by way of example, description will be given with reference to a case where external shape designing for a telephone set is effected through employment of the image data base system shown in Fig. 8.

In the case where such external shape designing for a telephone set is to be made, it becomes indispensable to comparatively study differences in shapes of push-buttons or in the rounding at corner portions of the telephone sets, and also to develop variations thereof. For this purpose, the external shape of the telephone set is first divided into three factors for the main body, push-button, and corner portion, and one or more than two part image data are formed per each factor by the image input device 2 for storing in the external memory device 13. As shown in Figs. 6(A) to 6(F), the respective part image data stored in the external memory device 13 are affixed with ID numbers for the attribute information, and accommodated in the respective records within the data file. Fig. 6(A) shows the part image data representing the shape of the main body in the telephone set, and in this embodiment, only this one kind is prepared as the main body shape. Figs. 6(B) to 6(D) are the part image data showing shapes of the push-buttons in the telephone set, and in this embodiment, three kinds of push-button shapes, i.e. square, circular and triangular shapes are prepared. Meanwhile, Figs. 6(E) and 6(F) are the part image data respectively showing the shapes at corner portions of the telephone set, and in this embodiment, two kinds of corner shapes, i.e. rounded corner and squarish corner shapes are prepared as illustrated.

Subsequently, by the operation of the keyboard 11 by the operator, data files for the part information, positional information, and combination information are prepared as shown in Figs. 7(A) to 7(C) for storing in the external memory device 13. More specifically Fig. 7(A) shows the data file structure for the part information, in which the part image data are classified according to the parts by enumerating the part names and ID numbers corresponding thereto. Fig. 7(B) represents the data file structure for the positional information, in which positions of the respective parts on the image are indicated by the bit map coordinates. In the present embodiment, through employment of a bit map of 500 x 500 in the number of picture elements and having the coordinates (0,0) at the left upper corner of the display, and the coordinates (499,499) at the right lower corner thereof in the image display device 15, it is so arranged that the left upper corner of the part image data form the main body is located at the coordinates (0,0), the left upper corner of the part image data for the push-buttons is positioned at the coordinates (200,200), and the left upper corner of the part image data for the corner shape is located at the coordinates (0,400). In this embodiment, although such positional information is univocally determined with respect to each part, it may be so modified that, a plurality of combination are preliminarily memorized for selection of any required one during the image formation. Fig. 7(C) shows the data file structure for the combination information, in which, with respect to each product No. corresponding to one image, the ID number of the part image data to be combined therewith is designated according to each part. In Fig. 7(C), it is shown that, in the product No. "I", the part image data of the ID No. 1 is designated with respect to the main body, the part image data of the ID No. 4 is designated with respect to the push-buttons, and the part image data of the ID No. 6 is designated with respect to the corner portions.

As described above, in the present embodiment, although the part information, positional information, and combination information must be stored in the external memory device 13, besides the part image data, owing to the fact that the respective images commonly possess the part image data requiring the most memory capacity, the memory capacity may be reduced by far as compared with that in the case where all image data are memorized for each one image, if the number of products is sufficiently large.

When the respective data files are formed as described above, through operation of the keyboard 11 by the operator, the combination information is read out from the external memory device 13, and one product No. is selected. if the product No. selected at this time is "II", the part image data with the ID number "1" for the main body, the part image data with the ID number "2" for the push-button, and the part image data with the ID number "5" for the corner portions, are respectively read out again from the external memory device 13. Furthermore, according to the positional information read out from the external memory device 13, the part image data for the main body, the part image data for the push-button, and the part image data for the corner portions are respectively written in so as to respectively overlap the bit map on the VRAM 4 based on the coordinates (0,0),(200,200) and (0,400). Then, the image of the telephone set as shown in Fig. 9(A) is displayed on the display screen of the image display device 15.

Subsequently, when the operator selects the part image data of the ID number "3" through operation of the keyboard 11, the part image data for this ID number "3" and the positional information therefor are read out from the external memory device 13. Then, when this part image data is written in the bit map on the VRAM 4 based on the coordinates (200,200) for the push-button, with reference to the above part information and positional information, the image of the telephone set different only in the shape of the push-buttons may be displayed through an extremely simple procedure as shown in Fig. 9(B). In the above case, since only the part image data for the push-buttons is read out from the external memory device 13 so as to be written in the VRAM 14, the processing time is reduced as compared with the case where the image data for one complete image is to be read and written in. Upon operation of the keyboard 11 by the operator for recording, the fresh image thus formed is automatically recorded as a product No. "III" in the data file of the combination information stored in the external memory device 13 by the processing program of the image data base. In other words, this means that the fresh image is recorded by merely adding the record of the combination information consisting of enumeration of the ID numbers. Meanwhile, with the coordinates for the positional information altered, if this part image data is read out from the external memory device 13 and written in the VRAM 14, an image having only the position of its part altered, is to be formed. In the above case, if the altered positional information is stored in the external memory device 13 as a separate record from the original positional information, images different only in the positions of the parts according to the respective product numbers of the combination information may be formed through selection of such positional information. Subsequently, in the similar manner, by displaying various images on the image display device 15 for recording depending on necessity, external shape designing of the telephone set is effected. For changing the part image data itself, it may be so arranged that, by altering the image displayed on the image display device 15 through operation of the keyboard 11, or by forming the part image data after the alteration through the image input device 12, such image data is replaced by the equivalent part image data stored in the external memory device 13. In this case, it is regarded that the same alteration is made with respect to all the images designating the altered part image data by the combination information.

As is clear from the foregoing description, the image data managing unit according to the present invention includes the image data memory means for memorizing part image data representing any desired portion of one image and also attribute information of said part image data respectively, the combination memory means for memorizing combination information which represents the combination of respective part image data necessary for forming one image by enumerating each of the attribute information, the position memory means for memorizing positional information which designates respective positions on the image, of the respective part image data necessary for forming one image, and the image output means which respectively reads out, from said image data memory means, the part image data corresponding to the respective attribute information enumerated in the combination information memorized by said combination memory means, and which outputs the respective part image data as read out so as to be disposed at the predetermined positions on the image according to the positional information memorized by said position memory means.

Therefore, favorable effects as follows may be obtained.
(1) Since the common part image data as the elements of many images which can be outputted is memorized as one record within the data file by the image data memory means so as to be commonly utilized by the respective images, although the combination information and positional information must be separately memorized, such a loss that the image data requiring particularly large memory capacity is stored in the memory device in duplication is eliminated, thus resulting in the reduction of the memory capacity.
(2) Owing to the fact that, by only altering the part image data of one record memorized in the image data memory means, it is regarded that the same alteration is effected with respect to all the images using this part image data as the element, and thus, any loss is eliminated from the image data management.
(3) In the case where, it is intended to alter the part image data only at a portion of one image, to the same data as the part image data becoming a portion of the other image, merely the corresponding attribute information in the respective attribute information as enumerated in the combination information for forming the image to be altered, is required to be rewritten to the same one as for said other image, and thus, the managing work is extremely facilitated. Moreover, also in the case where, merely the arrangement of a portion of the part image data is to be altered, only the contents of the corresponding coordinates in the coordinated enumerated in the positional information for forming this image are required to be altered, and thus, the work is markedly facilitated.
(4) For comparative review, etc., for example, by sequentially replacing for display, only the part image data at a portion of the image, it is merely required to output only said part image data for replacement with the original par image data, and thus, processing time and the operator's waiting time may be advantageously reduced.

## Claims

1. An image data managing unit which comprises an image data memory means (13) for memorizing part image data and for memorizing attribute information of said part image data respectively, and an image output means (15,16) which respectively reads out, from said image data memory means (13), the part image data corresponding to the respective attribute information,
**characterized by**
a combination memory means (14) for memorizing combination information which represent the combination of respective part image data necessary for forming the image by enumerating each of the respective attribute information, the part image data representing desired portions of an image to be composed of these portions,
a position memory means for memorizing positional information which designates respective positions in the image, of the respective part image data necessary for forming the image,
the respective part image data as read out being output so as to be disposed at the predetermined positions in the image according to the positional information memorized by said position memory means.

## Patentansprüche

1. Bilddatenverwaltungseinheit mit einer Bilddatenspeichereinrichtung (13) zum Speichern von Teilbilddaten und zum Speichern von Attributinformationen der Teilbilddaten, und einer Bildausgabeeinrichtung (15,16), die jeweils die den betreffenden Attributinformationen entsprechenden Teilbilddaten aus der Bilddatenspeichereinrichtung (13) ausliest,
**gekennzeichnet durch**
eine Kombinationen-Speichereinrichtung (14) zum Speichern von Kombinationsinformationen, die die Kombinationen von jeweiligen Teilbilddaten repräsentieren, die zur Bildung des Bildes durch einzelnes Aufführen jeder der jeweiligen Attributinformationen notwendig sind, wobei die Teilbilddaten gewünschte Teile eines aus diesen Teilen zusammenzusetzenden Bildes repräsentieren,
eine Positionen-Speichereinrichtung zum Speichern von Positionsinformationen, die jeweilige Positionen in dem Bild der zur Bildung des Bildes notwendigen jeweiligen Teilbilddaten bezeichnen,
wobei die jeweiligen Teilbilddaten, wie ausgelesen, ausgegeben werden, um an den den von der Positionen-Speichereinrichtung gespeicherten Positionsinformationen entsprechenden vorbestimmten Positionen in dem Bild angeordnet zu werden.

## Revendications

1. Unité de gestion de données d'image, qui comprend un moyen de mémorisation de données d'image (13) destiné à mémoriser des données d'image partielle et à mémoriser des informations d'attributs desdites données d'image partielle respectivement, et un moyen de sortie d'image (15,16) qui, respectivement, extrait par lecture, dudit moyen de mémorisation de données d'image (13), les données d'image partielle correspondant aux informations d'attributs respectives,
caractérisée par
un moyen de mémorisation de combinaison (14) destiné à mémoriser des informations de combinaison qui représentent la combinaison de données d'image partielle respectives nécessaires pour former l'image par énumération de chacune des informations d'attributs respectives, les données d'image partielle représentant des parties souhaitées d'une image destinée à être composée de ces parties,
un moyen de mémorisation de positions destiné à mémoriser des informations de position qui identifient des positions respectives, dans l'image, des données d'image partielle respectives nécessaires pour former l'image,
les données d'image partielle respectives, une fois extraites par lecture, étant délivrées de telle façon à être disposées aux positions prédéterminées dans l'image, conformément aux informations de position mémorisées par ledit moyen de mémorisation de positions.
